# EUROPÄISCHE PATENTSCHRIFT

(11) **EP 3 548 757 B1**
(45) Veröffentlichungstag und Bekanntmachung des Hinweises auf die Patenterteilung: **02.09.2020**
(21) Anmeldenummer: 17791047.8
(22) Anmeldetag: 24.10.2017
(51) Int. Cl.: F16C 11/06

(54) **KUGELSCHALE FÜR EIN KUGELGELENK**
BALL SOCKET FOR A BALL JOINT
COUSSINET SPHÉRIQUE POUR UNE ARTICULATION À ROTULE

(30) Priorität: 02.12.2016 DE 102016224045
(43) Veröffentlichungstag der Anmeldung: 09.10.2019
(73) Patentinhaber: ZF Friedrichshafen AG, 88046 Friedrichshafen (DE)
(72) Erfinder: RICHTER, Thomas, 49401 Damme (DE); PRINS, Hans, 49401 Damme (DE)
(74) Vertreter: ZF Friedrichshafen AG
(86) Internationale Anmeldenummer: PCT/EP2017/077078
(87) Internationale Veröffentlichungsnummer: WO 2018/099653

(56) Entgegenhaltungen:
- EP-A1- 0 379 392
- WO-A1-2011/021217
- DE-U1- 20 107 002
- FR-A- 1 292 538
- FR-A1- 2 789 359

## Beschreibung

Die Erfindung betrifft eine Kugelschale für ein Kugelgelenk, mit einem eine Kugelschalenöffnung und einen Hohlraum umfassenden Kugelschalenkörper, der eine den Hohlraum begrenzende und um eine sich in einer axialen Richtung erstreckende Längsachse herum verlaufende, konkave Innenumfangsfläche umfasst und entlang der Längsachse in zwei hintereinander angeordnete und in einem Übergangsbereich ineinander übergehende Kugelschalenkörperhälften unterteilt ist, die jeweils eine um die Längsachse herum verlaufende Innenumfangsflächenhälfte der Innenumfangsfläche umfassen, wobei eine erste der Kugelschalenkörperhälften eine erste der Innenumfangsflächenhälften umfasst, die auf einer Kugelfläche liegt und in Umfangsrichtung geschlossen ausgebildet ist, und eine zweite der Kugelschalenkörperhälften die Kugelschalenöffnung, wenigstens einen in Richtung der Längsachse verlaufenden Schlitz und eine zweite der Innenumfangsflächenhälften umfasst, die in Umfangsrichtung geschlossen oder bis auf den Schlitz geschlossen ausgebildet ist. Eine derartige Kugelschale ist aus der DE 201 07 002 U1 bekannt, wobei die zweite Kugelschalenkörperhälfte in der Ausbildung von elastisch deformierbaren Federzungen im axialen Abstand zum Übergangsbereich außerhalb der Kugelfläche liegt. Auch im montierten Zustand verbleiben die Federzungen außerhalb der Kugelfläche und die Schlitze der hier offenbarten Kugelschale verbleiben offen. DE 201 07 002 U1 offenbart eine Kugelschale gemäß dem Oberbegriff des Anspruchs 1.

Auch der WO 2011/021217 A1 oder der FR 2 789 359 A1 ist jeweils eine Kugelschale mit mindestens einem Schlitz zu entnehmen, wobei ein Rand der Kugelschale außerhalb der Kugelfläche liegt. Dieser Rand liegt auch im montierten Zustand außerhalb der Kugelfläche und die Schlitze verbleiben offen. Auch der EP 0 379 392 A1 ist eine Kugelschale mit mindestens einem Schlitz zu entnehmen, wobei die Innenumfangsfläche der Kugelschale außerhalb der Kugelfläche liegt. Im montierten Zustand verbleiben die Schlitze offen.

Geschlitzte Kugelschalen sind aus dem Stand der Technik bekannt, wobei sich der Schlitz z.B. über die gesamte Kugelschalenhöhe erstreckt. Nach dem Einbau in das Gelenkgehäuse wird der Schlitz nicht geschlossen, sondern in der Regel in einer Richtung orientiert, die quer zu Belastungsrichtung des Kugelgelenks liegt. Im Rahmen von Verschleißuntersuchungen wurde jedoch festgestellt, dass das Material der Kugelschale unter hohen Belastungen, z.B. bei Flächenpressungen von mehr als 130 MPa, in den Bereich des Schlitzes hineinfließt. Dies ist unerwünscht, da sich dadurch die Geometrie der Kugelschale und somit die voreingestellten Lagerungseigenschaften des Kugelgelenks ändern.

Ausgehend hiervon liegt der Erfindung die Aufgabe zugrunde, eine geschlitzte Kugelschale zu schaffen, deren Schlitz während der Montage des Kugelgelenks geschlossen werden kann.

Diese Aufgabe wird durch eine Kugelschale nach Anspruch 1 gelöst. Bevorzugte Weiterbildungen der Kugelschale sind in den Unteransprüchen und in der nachfolgenden Beschreibung gegeben.

Die Kugelschale für ein Kugelgelenk weist einen eine Kugelschalenöffnung und einen Hohlraum umfassenden Kugelschalenkörper, der eine den Hohlraum begrenzende und um eine sich in einer axialen Richtung erstreckende Längsachse herum verlaufende, konkave Innenumfangsfläche umfasst und entlang der Längsachse in zwei hintereinander angeordnete und in einem Übergangsbereich ineinander übergehende Kugelschalenkörperhälften unterteilt ist, die jeweils eine um die Längsachse herum verlaufende Innenumfangsflächenhälfte der Innenumfangsfläche umfassen, wobei eine erste der Kugelschalenkörperhälften eine erste der Innenumfangsflächenhälften umfasst, die auf einer Kugelfläche liegt und in Umfangsrichtung geschlossen ausgebildet ist, und eine zweite der Kugelschalenkörperhälften die Kugelschalenöffnung, einen oder wenigstens einen in Richtung der Längsachse verlaufenden Schlitz und eine zweite der Innenumfangsflächenhälften umfasst, die in Umfangsrichtung geschlossen oder bis auf den Schlitz geschlossen ausgebildet ist, wobei die zweite Kugelschalenkörperhälfte derart ausgebildet ist, dass die zweite Innenumfangsflächenhälfte, insbesondere im oder zumindest im axialen Abstand zum Übergangsbereich, außerhalb der Kugelfläche liegt, wobei die zweite Kugelschalenkörperhälfte (18) zum Schließen des Schlitzes (19) verformbar ist, wonach die zweite Innenumfangsflächenhälfte (18) auf der Kugelfläche (9) liegt.

Somit ist es möglich, die zweite Kugelschalenkörperhälfte zu verformen und dabei den Schlitz zu schließen, wonach die zweite Innenumfangsflächenhälfte auf der Kugelfläche liegt. Insbesondere ist die zweite Kugelschalenkörperhälfte, vorzugsweise im axialen Abstand zum Übergangsbereich, bezüglich der Kugelfläche größer ausgebildet als die erste Kugelschalenkörperhälfte oder die erste Kugelschalenkörperhälfte im Übergangsbereich.

Bevorzugt wird bei oder zu einem Einbau der Kugelschale in ein Gelenkgehäuse des oder eines Kugelgelenks der Kugelschalenkörper mit seiner zweiten Kugelschalenkörperhälfte, vorzugsweise in Richtung der Längsachse, gegen eine im Innern des Gelenkgehäuses vorgesehene, vorzugsweise konkave, Gegenfläche gedrückt, sodass die zweite Kugelschalenkörperhälfte verformt und der Schlitz geschossen wird. Die zweite Kugelschalenkörperhälfte wird dabei derart verformt, dass die zweite Innenumfangsflächenhälfte auf der Kugelfläche liegt. Das Kugelgelenk ist vorzugsweise für ein Fahrzeug, insbesondere für ein Kraftfahrzeug vorgesehen. Vorteilhaft ist das Kugelgelenk zum Einbau in ein Fahrwerk des oder eines Fahrzeugs oder Kraftfahrzeugs vorgesehen.

Bevorzugt wird bei, zu oder vor dem Einbau der Kugelschale in das Gelenkgehäuse eine Gelenkkugel in den Kugelschalenkörper und/oder in den Hohlraum eingebracht und/oder gelagert. Die Innenumfangsfläche bildet insbesondere eine Lagerfläche für die oder eine Gelenkkugel des oder eines Kugelgelenks. Vorzugsweise dient die Innenumfangsfläche zur gleitbeweglichen Lagerung der Gelenkkugel. Vorteilhaft liegt die Oberfläche der Gelenkkugel, insbesondere zumindest teilweise, auf der Kugelfläche. Die Gelenkkugel ist vorzugsweise an einem Kugelzapfen des Kugelgelenks vorgesehen. Bevorzugt wird bei, zu oder vor dem Einbau der Kugelschale in das Gelenkgehäuse der Kugelzapfen mit seiner Gelenkkugel derart in den Kugelschalenkörper und/oder in den Hohlraum eingebracht und/oder gelagert, dass sich der Kugelzapfen, insbesondere durch die Kugelschalenöffnung hindurch, aus der Kugelschale und/oder aus dem Kugelschalenkörper heraus erstreckt. Vorteilhaft werden die Kugelschale und der Kugelzapfen derart in das Gelenkgehäuse eingebaut, dass sich der Kugelzapfen, insbesondere durch eine in dem Gelenkgehäuse vorgesehene Gehäuseöffnung hindurch, aus dem Gelenkgehäuse heraus erstreckt.

Die Kugelfläche ist vorzugsweise eine fiktive Fläche und/oder bildet insbesondere keine Körperfläche der Kugelschale und/oder des Kugelschalenkörpers. Vorteilhaft ist der Kugelfläche ein Kugelmittelpunkt zugeordnet. In dem oder einem im Gelenkgehäuse eingebauten Zustand der Kugelschale fällt der Kugelmittelpunt der Kugelfläche bevorzugt mit dem Mittelpunkt der Gelenkkugel zusammen. Die Innenumfangsflächenhälfte ist bevorzugt eine teil-hohlkugelförmige Fläche, deren Mittelpunkt insbesondere mit dem Kugelmittelpunt der Kugelfläche zusammenfällt.

Als radiale Richtung wird insbesondere eine oder jedweder Richtung bezeichnet, die durch den Kugelmittelpunkt der Gelenkkugel verläuft. Ferner wird als Umfangsrichtung insbesondere eine Richtung bezeichnet, die vorzugsweise entlang eines Kreisbogens, um die Längsachse herum verläuft.

Gemäß einer Ausgestaltung weist die zweite Innenumfangsflächenhälfte, insbesondere im oder zumindest im axialen Abstand zum Übergangsbereich, zu dem Kugelmittelpunkt der Kugelfläche eine Innenumfangsflächenentfernung auf, die vorzugsweise größer als der Radius der Kugelfläche ist. Die zweite Innenumfangsflächenhälfte liegt bevorzugt vollständig oder in oder zumindest in einem Innenumfangsflächenbereich der zweiten Innenumfangsflächenhälfte außerhalb der Kugelfläche, wobei der Innenumfangsflächenbereich vorteilhaft einen axialen Abstand zum Übergangsbereich aufweist. Insbesondere erstreckt sich der Innenumfangsflächenbereich der zweiten Innenumfangsflächenhälfte, vorzugsweise in Richtung der Längsachse, bis zu der Kugelschalenöffnung. Bevorzugt weist der Innenumfangsflächenbereich der zweiten Innenumfangsflächenhälfte zu dem Kugelmittelpunkt der Kugelfläche die oder eine Innenumfangsflächenentfernung auf, die vorzugsweise größer als der Radius der Kugelfläche ist.

Der Schlitz weist in Umfangsrichtung eine Schlitzweite auf. Die Schlitzweite ist beispielsweise in Richtung der Längsachse konstant. In diesem Fall ist z.B. auch die Innenumfangsflächenentfernung der zweiten Innenumfangsflächenhälfte und/oder des Innenumfangsflächenbereichs der zweiten Innenumfangsflächenhälfte in Richtung der Längsachse konstant. Gemäß einer Variante variiert aber die Innenumfangsflächenentfernung der zweiten Innenumfangsflächenhälfte und/oder des Innenumfangsflächenbereichs der zweiten Innenumfangsflächenhälfte in Richtung der Längsachse. Alternativ variiert die Schlitzweite z.B. in Richtung der Längsachse. In diesem Fall variiert insbesondere auch die Innenumfangsflächenentfernung der zweiten Innenumfangsflächenhälfte und/oder des Innenumfangsflächenbereichs der zweiten Innenumfangsflächenhälfte in Richtung der Längsachse, vorzugsweise in Abhängigkeit von und/oder proportional zu der Schlitzweite. Bevorzugt ist die oder die jeweilige Innenumfangsflächenentfernung der zweiten Innenumfangsflächenhälfte und/oder des Innenumfangsflächenbereichs der zweiten Innenumfangsflächenhälfte, beispielsweise an oder im Bereich der Kugelschalenöffnung, um einen von der oder der jeweiligen Schlitzweite abhängigen Betrag und/oder Längenunterschied größer als der Radius der Kugelfläche. Vorteilhaft entspricht der von der oder der jeweiligen Schlitzweite abhängige Betrag und/oder Längenunterschied dem Quotienten aus der oder der jeweiligen halben Schlitzweite und der Kreiszahl Pi. Bevorzugt ergibt sich der von der oder der jeweiligen Schlitzweite abhängige Betrag und/oder Längenunterschied aus der oder der jeweiligen halben Schlitzweite geteilt durch die Kreiszahl Pi. Hierdurch kann insbesondere sichergestellt werden, dass die zweite Innenumfangsflächenhälfte nach dem Einbau der Kugelschale in das Gelenkgehäuse und nach dem Verformen der zweiten Kugelschalenkörperhälfte und nach dem Schließen des Schlitzes auf der Kugelfläche liegt, sodass die Innenumfangsfläche vorzugsweise insgesamt auf der Kugelfläche liegt.

Gemäß einer Weiterbildung umfasst der Kugelschalenkörper eine, insbesondere um die Längsachse herum verlaufende, Außenumfangsfläche. Vorzugsweise umfassen die Kugelschalenkörperhälften jeweils eine, insbesondere um die Längsachse herum verlaufende, Außenumfangsflächenhälfte der Außenumfangsfläche. Bevorzugt umfasst die erste Kugelschalenkörperhälfte eine erste der Außenumfangsflächenhälften, die insbesondere in Umfangsrichtung geschlossen ausgebildet ist. Vorzugsweise umfasst die zweite Kugelschalenkörperhälfte eine zweite der Außenumfangsflächenhälften, die insbesondere in Umfangsrichtung geschlossen oder bis auf den Schlitz geschlossen ausgebildet ist. Vorteilhaft ist die zweite Außenumfangsflächenhälfte konvex. Bevorzugt weist die zweite Außenumfangsflächenhälfte, insbesondere im oder zumindest im axialen Abstand zum Übergangsbereich, zu dem Kugelmittelpunkt der Kugelfläche eine Außenumfangsflächenentfernung auf, die größer als die Entfernung der ersten Außenumfangsflächenhälfte im Übergangsbereich zu dem Kugelmittelpunkt der Kugelfläche ist. Die Schlitzweite ist beispielsweise in Richtung der Längsachse konstant. In diesem Fall ist z.B. auch die Außenumfangsflächenentfernung der zweiten Außenumfangsflächenhälfte in Richtung der Längsachse konstant. Gemäß einer Variante variiert aber die Außenumfangsflächenentfernung der zweiten Außenumfangsflächenhälfte in Richtung der Längsachse. Alternativ variiert die Schlitzweite z.B. in Richtung der Längsachse. In diesem Fall variiert insbesondere auch die Außenumfangsflächenentfernung der zweiten Außenumfangsflächenhälfte in Richtung der Längsachse, vorzugsweise in Abhängigkeit von und/oder proportional zu der Schlitzweite. Bevorzugt ist die oder die jeweilige Außenumfangsflächenentfernung der zweiten Außenumfangsflächenhälfte, beispielsweise an oder im Bereich der Kugelschalenöffnung, um den von der oder der jeweiligen Schlitzweite abhängigen Betrag und/oder Längenunterschied größer als die Entfernung der ersten Außenumfangsflächenhälfte im Übergangsbereich zu dem Kugelmittelpunkt der Kugelfläche. Hierdurch kann insbesondere sichergestellt werden, dass beim Einbau der Kugelschale in das Gelenkgehäuse die zweite Kugelschalenkörperhälfte durch das Drücken der Kugelschale gegen die Gegenfläche im ausreichendem Maß verformt wird, sodass die zweite Innenumfangsflächenhälfte auf der Kugelfläche liegt und der Schlitz geschlossen wird. Gemäß einer Ausgestaltung weist der Kugelschalenkörper eine, insbesondere den Hohlraum umschließende oder zumindest teilweise umschließende, Wandung auf. Die Wandung umfasst vorzugsweise die Innenumfangsfläche und/oder die Außenumfangsfläche. Bevorzugt verläuft die Wandung um die Längsachse herum. Der Schlitz ist vorzugsweise in der Wandung vorgesehen und/oder erstreckt sich vorzugsweise durch diese hindurch. Vorteilhaft ist die Kugelschalenöffnung in der Wandung vorgesehen und/oder die Kugelschalenöffnung erstreckt sich vorteilhaft durch die Wandung hindurch. Vorzugsweise umfassen die Kugelschalenkörperhälften jeweils eine, insbesondere um die Längsachse herum verlaufende, Wandungshälfte der Wandung. Bevorzugt umfasst die erste Kugelschalenkörperhälfte eine erste der Wandungshälften, die insbesondere in Umfangsrichtung geschlossen ausgebildet ist. Vorzugsweise umfasst die zweite Kugelschalenkörperhälfte eine zweite der Wandungshälften. Der Schlitz ist insbesondere in der zweiten Wandungshälfte vorgesehen und/oder erstreckt sich insbesondere durch die zweite Wandungshälfte hindurch. Vorteilhaft ist die Kugelschalenöffnung in der zweiten Wandungshälfte vorgesehen und/oder die Kugelschalenöffnung erstreckt sich vorteilhaft durch die zweite Wandungshälfte hindurch. Bevorzugt umfasst die erste Wandungshälfte die erste Innenumfangsflächenhälfte und/oder die erste Außenumfangsflächenhälfte. Vorteilhaft umfasst die zweite Wandungshälfte die zweite Innenumfangsflächenhälfte und/oder die zweite Außenumfangsflächenhälfte. Insbesondere ist die zweite Wandungshälfte in Umfangsrichtung geschlossen oder bis auf den Schlitz geschlossen ausgebildet. Vorteilhaft ist die Dicke der Wandung in der zweiten Kugelschalenkörperhälfte, insbesondere in Richtung der Längsachse, konstant oder näherungsweise konstant. Bevorzugt ist die Dicke der zweiten Wandungshälfte, insbesondere in Richtung der Längsachse, konstant oder näherungsweise konstant. Die Dicke der Wandung kann beispielsweise auch als Stärke der Wandung bezeichnet werden. Bevorzugt entspricht im Übergangsbereich die Dicke der Wandung in der zweiten Kugelschalenkörperhälfte der Dicke der Wandung in der ersten Kugelschalenkörperhälfte. Insbesondere entspricht im Übergangsbereich die Dicke der ersten Wandungshälfte der Dicke der zweiten Wandungshälfte. Auch hierdurch kann insbesondere sichergestellt werden, dass beim Einbau der Kugelschale in das Gelenkgehäuse die zweite Kugelschalenkörperhälfte durch das Drücken der Kugelschale gegen die Gegenfläche im ausreichendem Maß verformt wird, sodass die zweite Innenumfangsflächenhälfte auf der Kugelfläche liegt und der Schlitz geschlossen wird.

Die Kugelschalenöffnung ist bevorzugt an einem axialen Ende des Kugelschalenkörpers und/oder der Wandung vorgesehen. Insbesondere geht die Kugelschalenöffnung in den Hohlraum über. Vorteilhaft weist der Kugelschalenkörper an einem der Kugelschalenöffnung axial gegenüberliegenden Ende einen Boden auf. Der Boden ist bevorzugt an einem anderen axialen Ende des Kugelschalenkörpers und/oder der Wandung vorgesehen. Der Boden umfasst beispielsweise einen quer zur Längsachse nach außen abstehenden, insbesondere um die Längsachse herumlaufenden, Bund, der vorzugsweise ein Ringbund ist. Beim Einbau der Kugelschale in das Gelenkgehäuse wird der Bund z.B. an eine an oder in dem Gelenkgehäuse vorgesehen Anlagefläche angelegt. Bevorzugt weist der Kugelschalenkörper eine Bodenöffnung auf, die insbesondere der Kugelschalenöffnung axial gegenüberliegt. Vorteilhaft ist die Bodenöffnung in dem Boden und/oder an dem oder einem anderen axialen Ende des Kugelschalenkörpers und/oder der Wandung vorgesehen. Insbesondere geht die Bodenöffnung in den Hohlraum über.

Bevorzugt erstreckt sich der Schlitz, insbesondere in Richtung der Längsachse, von der Kugelschalenöffnung bis zu einem Schlitzende, welches vorzugsweise in der zweiten Kugelschalenkörperhälfte liegt. Die konkrete Länge des Schlitzes, vorzugsweise in Richtung der Längsachse, hängt aber insbesondere von dem Umformgrad der Kugelschale und/oder des Kugelschalenkörpers und/oder der zweiten Kugelschalenkörperhälfte beim Einbau der Kugelschale in das Gelenkgehäuse ab. Beispielsweise weist das Schlitzende einen axialen Abstand zum Übergangsbereich auf. Bevorzugt liegt das Schlitzende aber im Übergangsbereich. Insbesondere erstreckt sich der Schlitz, vorzugsweise in Richtung der Längsachse, von der Kugelschalenöffnung bis zum Übergangsbereich. Bevorzugt definiert das Schlitzende den Übergangsbereich.

Der Schlitz weist in Umfangsrichtung die oder eine Schlitzweite auf. Beispielsweise ist die Schlitzweite, vorzugsweise in Richtung der Längsachse, konstant. Bei einer, insbesondere in Richtung der Längsachse, konstanten Schlitzweite kann das vollständige Schließen des Schlitzes beim Einbau der Kugelschale in das Gelenkgehäuse aber erschwert werden. Bevorzugt verjüngt sich die Schlitzweite des Schlitzes, insbesondere in Richtung der Längsachse, ausgehend von der Kugelschalenöffnung in Richtung auf den Übergangsbereich und/oder bis zum Schlitzende hin, vorzugsweise stetig. Vorteilhaft verjüngt sich die Schlitzweite des Schlitzes, insbesondere in Richtung der Längsachse, ausgehend von der Kugelschalenöffnung bis zum Übergangsbereich hin, vorzugsweise stetig. Durch diese Maßnahme kann insbesondere das vollständige Schließen des Schlitzes beim Einbau der Kugelschale in das Gelenkgehäuse erleichtert und/oder sichergestellt werden. Beispielsweise ist die Schlitzweite des Schlitzes am Schlitzende und/oder im Übergangsbereich bis auf Null oder näherungsweise Null reduziert.

Gemäß einer Weiterbildung reduziert sich die Innenumfangsflächenentfernung der zweiten Innenumfangsflächenhälfte und/oder des Innenumfangsflächenbereichs der zweiten Innenumfangsflächenhälfte, insbesondere in Richtung der Längsachse, ausgehend von der Kugelschalenöffnung in Richtung auf den Übergangsbereich und/oder bis zum Schlitzende hin, vorzugsweise in Abhängigkeit von und/oder proportional zu der Schlitzweite. Vorteilhaft reduziert sich die Innenumfangsflächenentfernung der zweiten Innenumfangsflächenhälfte und/oder des Innenumfangsflächenbereichs der zweiten Innenumfangsflächenhälfte, insbesondere in Richtung der Längsachse, ausgehend von der Kugelschalenöffnung bis zum Übergangsbereich hin, vorzugsweise in Abhängigkeit von und/oder proportional zu der Schlitzweite. Bevorzugt entspricht die Innenumfangsflächenentfernung der zweiten Innenumfangsflächenhälfte und/oder des Innenumfangsflächenbereichs der zweiten Innenumfangsflächenhälfte am Schlitzende und/oder im Übergangsbereich dem Radius der Kugelfläche.

Bevorzugt bildet jeder auf der zweiten Innenumfangsflächenhälfte liegende und in Richtung der Längsachse verlaufende Bogen einen Kreisbogen, dessen Radius größer als der Radius der Kugelfläche ist, wobei der Mittelpunkt des oder jedes Kreisbogens, insbesondere quer zur Längsachse, gegenüber dem Kugelmittelpunkt der Kugelfläche versetzt ist. Vorzugsweise schneidet der oder jeder Kreisbogen im Übergangsbereich oder in der Nähe des Übergangsbereichs oder im Bereich des Schlitzendes oder in der Nähe des Bereichs des Schlitzendes die Kugelfläche. Vorteilhaft weist der oder jeder Kreisbogen an oder im Bereich der Kugelschalenöffnung zu dem Kugelmittelpunkt der Kugelfläche einen Abstand auf, der insbesondere einer Summe aus dem Radius der Kugelfläche und einem Längenunterschied entspricht. Vorteilhaft entspricht dieser Längenunterschied der halben Schlitzweite geteilt durch die Kreiszahl Pi. Beispielsweise entspricht dieser Längenunterschied dem von der oder der jeweiligen Schlitzweite abhängigen Betrag und/oder Längenunterschied, insbesondere an oder im Bereich der Kugelschalenöffnung. Ferner entspricht der vorgenannte Abstand vorzugsweise der Innenumfangsflächenentfernung an oder im Bereich der Kugelschalenöffnung.

Der Schlitz weist in einer bezüglich des Kugelmittelpunkts der Kugelfläche radialen Richtung und/oder in einer quer zur Längsachse verlaufenden Richtung bevorzugt eine Schlitztiefe auf. Die Schlitztiefe entspricht insbesondere der oder näherungsweise der Dicke der Wandung in der zweiten Kugelschalenkörperhälfte und/oder der Dicke der zweiten Wandungshälfte.

Die erste Kugelschalenkörperhälfte geht im Übergangsbereich und/oder im Bereich des Schlitzendes, insbesondere bezüglich ihres Innendurchmessers und/oder ihres Außendurchmessers, vorzugsweise kontinuierlich und/oder stetig in die zweite Kugelschalenkörperhälfte über. Bevorzugt geht die erste Innenumfangsflächenhälfte im Übergangsbereich, insbesondere bezüglich ihres Durchmessers oder Innendurchmessers, vorzugsweise kontinuierlich und/oder stetig in die zweite Innenumfangsflächenhälfte über. Ferner geht die erste Außenumfangsflächenhälfte im Übergangsbereich, insbesondere bezüglich ihres Durchmessers oder Außendurchmessers, vorzugsweise kontinuierlich und/oder stetig in die zweite Außenumfangsflächenhälfte über.

Gemäß einer Weiterbildung ist die Kugelschale und/oder der Kugelschalenkörper ein in einem Spritzgusswerkzeug hergestelltes Spritzgussteil. Der Schlitz wird in dem Spritzgusswerkzeug insbesondere durch einen oder wenigstens einen Vorsprung des Spritzgusswerkzeugs gebildet, der rasch verschleißen kann, z.B. wenn er mit einem anderen Teil des Werkzeugs in Kontakt gerät. Aus diesem Grund wird der Vorsprung vorzugsweise kürzer als die Schlitztiefe und/oder die Dicke der Wandung im Bereich des Schlitzes ausgebildet, sodass nach dem Spritzgießen in dem Schlitz eine Haut verbleibt. Bevorzugt ist im Spritzgusswerkzeug der Schlitz somit durch die oder eine Haut geschlossen. Die Haut ist insbesondere dünner als die Schlitztiefe und/oder die Dicke der Wandung im Bereich des Schlitzes. Beim Entformen der Kugelschale und/oder des Kugelschalenkörpers aus dem Spritzgusswerkzeug reißt die Haut vorzugsweise ein, sodass der Schlitz nach dem Entformen der Kugelschale und/oder des Kugelschalenkörpers in der oder einer bezüglich des Kugelmittelpunkts der Kugelfläche radialen Richtung und/oder in der oder einer quer zur Längsachse verlaufenden Richtung insbesondere durchgängig ausgebildet ist.

Gemäß einer Ausgestaltung ist der Schlitz in der oder einer bezüglich des Kugelmittelpunkts der Kugelfläche radialen Richtung und/oder in der oder einer quer zur Längsachse verlaufenden Richtung stufenförmig ausgebildet. In diesem Fall wird der Schlitz in dem Spritzgusswerkzeug insbesondere durch zwei einander gegenüberliegende, aber versetzt zueinander angeordnete Vorsprünge des Spritzgusswerkzeugs gebildet. Somit können die Vorsprünge kürzer ausgebildet werden, was die Gefahr des Verschleißes der Vorsprünge reduziert. Beispielsweise entspricht die Länge der Vorsprünge jeweils der halben Schlitztiefe und/oder der halben Dicke der Wandung im Bereich des Schlitzes. Bevorzugt werden die Vorsprünge aber jeweils kürzer als die halbe Schlitztiefe und/oder die halbe Dicke der Wandung im Bereich des Schlitzes ausgebildet, sodass nach dem Spritzgießen die oder eine Haut verbleibt. Die Haut ist insbesondere dünner als die halbe Schlitztiefe und/oder die halbe Dicke der Wandung im Schlitzbereich. Beim Entformen der Kugelschale und/oder des Kugelschalenkörpers aus dem Spritzgusswerkzeug reißt die Haut vorzugsweise ein, sodass der Schlitz nach dem Entformen insbesondere nicht durch die Haut geschlossen ist.

Der stufenförmig ausgebildete Schlitz umfasst bevorzugt zwei, insbesondere in Richtung der Längsachse verlaufende, Schlitzhälften, die in Umfangsrichtung zueinander versetzt angeordnet sind. Im Spritzgusswerkzeug sitzt die Haut vorzugsweise zwischen den Schlitzhälften. Vorteilhaft ist eine erste der Schlitzhälften in die zweite Außenumfangsflächenhälfte eingebracht. Vorzugsweise ist eine zweite der Schlitzhälften in die zweite Innenumfangsflächenhälfte eingebracht.

Bevorzugt erstreckt sich jede Schlitzhälfte, insbesondere in Richtung der Längsachse, von der Kugelschalenöffnung bis zu einem Schlitzhälftenende, welches vorzugsweise in der zweiten Kugelschalenkörperhälfte liegt. Beispielsweise weist das Schlitzhälftenende jeder Schlitzhälfte einen axialen Abstand zum Übergangsbereich auf. Bevorzugt liegt jedes Schlitzhälftenende aber im Übergangsbereich. Insbesondere erstreckt sich jede Schlitzhälfte, vorzugsweise in Richtung der Längsachse, von der Kugelschalenöffnung bis zum Übergangsbereich. Bevorzugt sind die Schlitzhälften, insbesondere in Richtung der Längsachse, gleich lang. Vorzugsweise definieren oder bilden die Schlitzhälftenenden das Schlitzende.

Jede Schlitzhälfte weist in Umfangsrichtung insbesondere eine Schlitzhälftenweite auf. Beispielsweise ist die Schlitzhälftenweite jeder Schlitzhälfte, insbesondere in Richtung der Längsachse, konstant. Bevorzugt verjüngt sich aber jede Schlitzhälftenweite, insbesondere in Richtung der Längsachse, ausgehend von der Kugelschalenöffnung in Richtung auf den Übergangsbereich und/oder bis zum jeweiligen Schlitzhälftenende hin, vorzugsweise stetig. Insbesondere verjüngt sich die Schlitzhälftenweite jeder Schlitzhälfte, insbesondere in Richtung der Längsachse, ausgehend von der Kugelschalenöffnung bis zum Übergangsbereich hin, vorzugsweise stetig. Beispielsweise ist die Schlitzhälftenweite jeder Schlitzhälfte am jeweiligen Schlitzhälftenende und/oder im Übergangsbereich bis auf Null oder näherungsweise Null reduziert.

Insbesondere weisen die Schlitzhälften in Umfangsrichtung die gleiche oder jeweils die gleiche Schlitzhälftenweite auf. Vorzugsweise sind die Schlitzhälften in Umfangsrichtung um oder näherungsweise um die oder die jeweilige Schlitzhälftenweite zueinander versetzt angeordnet. Somit ergibt sich für den stufenförmig ausgebildeten Schlitz eine resultierende Schlitzweite, die insbesondere der oder der jeweiligen Schlitzhälftenweite entspricht oder näherungsweise entspricht.

Bevorzugt weist jede Schlitzhälfte in der oder einer bezüglich des Kugelmittelpunkts der Kugelfläche radialen Richtung und/oder in der oder einer quer zur Längsachse verlaufenden Richtung eine Schlitzhälftentiefe auf. Somit ergibt sich für den stufenförmig ausgebildeten Schlitz eine resultierende Schlitztiefe, die insbesondere der Summe der Schlitzhälftentiefen entspricht oder näherungsweise entspricht. Vorzugsweise weisen die Schlitzhälften die gleiche Schlitzhälftentiefe auf. Jede Schlitzhälftentiefe entspricht insbesondere der oder näherungsweise der halben Dicke der Wandung in der zweiten Kugelschalenkörperhälfte und/oder der halben Dicke der zweiten Wandungshälfte.

Bevorzugt bildet der Kugelschalenkörper ein einstückiges und/oder monolithisches Bauteil. Insbesondere gehen die Kugelschalenkörperhälften im Übergangsbereich materialhomogen und/oder stoffschlüssig ineinander über. Der Kugelschalenkörper besteht vorzugsweise aus Kunststoff, beispielsweise aus einem thermoplastischen Kunststoff.

Vorteilhaft ist und sind die Kugelschale und/oder der Kugelschalenkörper und/oder die Wandung und/oder die Innenumfangsfläche und/oder die Außenumfangsfläche und/oder die erste Kugelschalenkörperhälfte und/oder die zweite Kugelschalenkörperhälfte und/oder die erste Innenumfangsflächenhälfte und/oder die zweite Innenumfangsflächenhälfte und/oder die erste Außenumfangsflächenhälfte und/oder die zweite Außenumfangsflächenhälfte und/oder die erste Wandungshälfte und/oder die zweite Wandungshälfte bezüglich der Längsachse rotationssymmetrisch oder im Wesentlichen rotationssymmetrisch oder jeweils rotationssymmetrisch oder jeweils im Wesentlichen rotationssymmetrisch ausgebildet.

Die Erfindung wird nachfolgend anhand einer bevorzugten Ausführungsform unter Bezugnahme auf die Zeichnung beschrieben. In der Zeichnung zeigen:
- Fig. 1: eine Schnittansicht eines Kugelgelenks mit einer Kugelschale gemäß einer ersten Ausführungsform,
- Fig. 2: eine perspektivische Darstellung der Kugelschale gemäß der ersten Ausführungsform vor ihrem Einbau in das Kugelgelenk,
- Fig. 3: eine Draufsicht auf die Kugelschale gemäß der ersten Ausführungsform vor ihrem Einbau in das Kugelgelenk,
- Fig. 4: eine Schnittansicht der Kugelschale gemäß der ersten Ausführungsform entlang der aus der Fig. 3 ersichtlichen Schnittlinie A-A,
- Fig. 5: eine Schnittansicht der Kugelschale gemäß der ersten Ausführungsform entlang der aus der Fig. 4 ersichtlichen Schnittlinie B-B und
- Fig. 6: eine Seitenansicht einer Kugelschale gemäß einer zweiten Ausführungsform vor ihrem Einbau in ein Kugelgelenk.

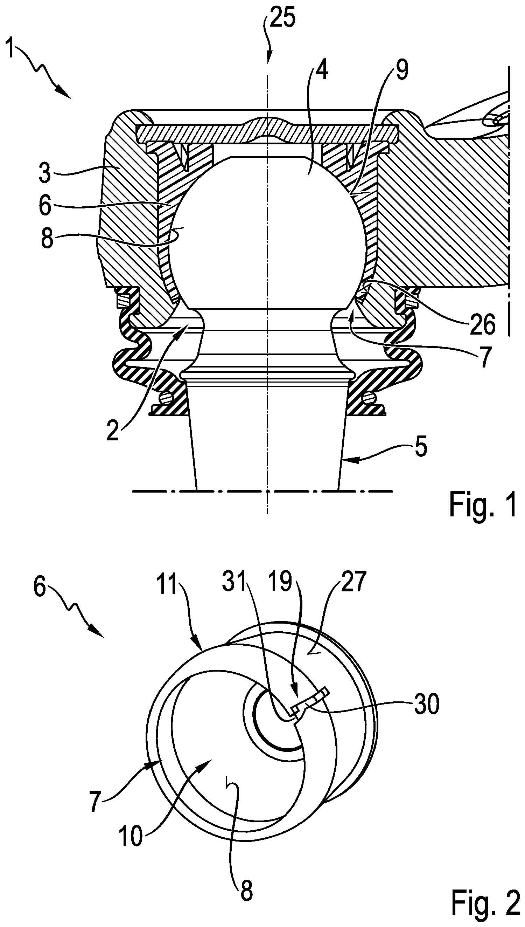

Aus Fig. 1 ist eine Schnittansicht eines Kugelgelenks 1 ersichtlich, welches ein eine Gehäuseöffnung 2 umfassendes Gelenkgehäuse 3 und einen eine Gelenkkugel 4 umfassenden Kugelzapfen 5 umfasst, der mit seiner Gelenkkugel 4 unter Zwischenschaltung einer Kugelschale 6 in dem Gelenkgehäuse 3 gelagert ist und sich aus diesem durch die Gehäuseöffnung 2 hindurch heraus erstreckt. Die Gelenkkugel 4 sitzt in der Kugelschale 6, die eine Kugelschalenöffnung 7 aufweist, durch welche hindurch sich der Kugelzapfen 5 aus der Kugelschale 6 heraus erstreckt. Ferner umfasst die Kugelschale 6 eine Innenumfangsfläche 8, an welcher die Gelenkkugel 4 gleitbeweglich anliegt. In dem aus Fig. 1 montierten Zustand der Kugelschale 6 liegt die Innenumfangsfläche 8 insgesamt auf einer Kugelfläche 9, die im montierten Zustand des Kugelgelenks 1 mit der Oberfläche der Gelenkkugel 4 zusammenfällt.

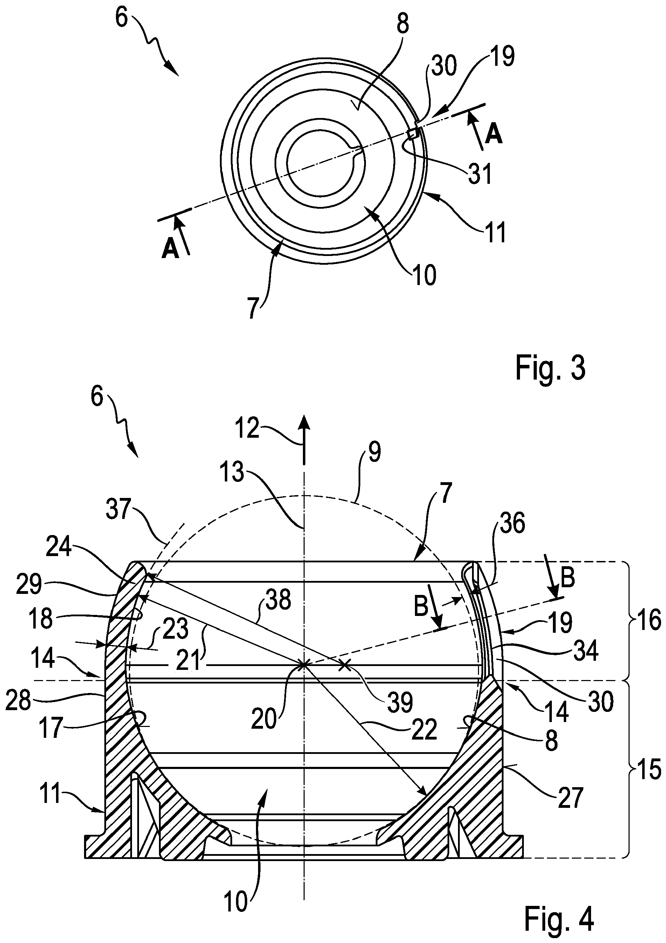

Fig. 2 zeigt eine perspektivische Darstellung der Kugelschale 6 vor ihrem Einbau in das Gelenkgehäuse 3, wobei aus Fig. 3 eine Draufsicht auf die Kugelschale 6 vor ihrem Einbau in das Gelenkgehäuse 3 ersichtlich ist. Ferner zeigt Fig. 4 einen Schnitt durch die Kugelschale 6 entlang der aus Fig. 3 ersichtlichen Schnittlinie A-A.

Die Kugelschale 6 umfasst einen die Kugelschalenöffnung 7 und einen Hohlraum 10 umfassenden Kugelschalenkörper 11, der die Innenumfangsfläche 8 umfasst, welche den Hohlraum 10 begrenzt und um eine sich in einer axialen Richtung 12 erstreckende Längsachse 13 des Kugelschalenkörpers 11 herum verläuft. Vor dem Einbau der Kugelschale 6 in das Gelenkgehäuse 3 ist die Innenumfangsfläche 8 zwar konkav, aber nicht vollständig kugelsymmetrisch, wie später noch erläutert wird.

Der Kugelschalenkörper 11 ist entlang der Längsachse 13 in zwei hintereinander angeordnete und in einem Übergangsbereich 14 ineinander übergehende Kugelschalenkörperhälften 15 und 16 unterteilt, die jeweils eine um die Längsachse 13 herum verlaufende Innenumfangsflächenhälfte 17 bzw. 18 der Innenumfangsfläche 8 umfassen. Dabei umfasst eine erste der Kugelschalenkörperhälften 15 eine erste der Innenumfangsflächenhälften 17, die auf der Kugelfläche 9 liegt und in Umfangsrichtung geschlossen ausgebildet ist. Ferner umfasst eine zweite der Kugelschalenkörperhälften 16 die Kugelschalenöffnung 7, einen in Richtung der Längsachse 13 verlaufenden Schlitz 19 und eine zweite der Innenumfangsflächenhälften 18, die in Umfangsrichtung bis auf den Schlitz 19 geschlossen ausgebildet ist. Dabei ist die zweite Innenumfangsflächenhälfte 18 konkav ausgebildet.

Wie insbesondere aus Fig. 4 ersichtlich, ist die zweite Kugelschalenkörperhälfte 16 derart ausgebildet, dass die zweite Innenumfangsflächenhälfte 18 im axialen Abstand zum Übergangsbereich 14 außerhalb der Kugelfläche 9 liegt. Die zweite Innenumfangsflächenhälfte 18 weist somit im axialen Abstand zum Übergangsbereich 14 zu einem Kugelmittelpunkt 20 der Kugelfläche 9 eine Innenumfangsflächenentfernung 21 aufweist, die größer als der Radius 22 der Kugelfläche 9 ist. Da ferner die Dicke 23 der Wandung 24 des Kugelschalenkörpers 11 in der zweiten Kugelschalenkörperhälfte 16 konstant ist und mit der Dicke der Wandung 24 des Kugelschalenkörpers 11 in der ersten Kugelschalenkörperhälfte 15 im Übergangsbereich 14 übereinstimmt, ist die zweite Kugelschalenkörperhälfte 16 im axialen Abstand zum Übergangsbereich 14 bezüglich des Kugelmittelpunkts 20 größer ausgebildet als die erste der Kugelschalenkörperhälfte 15 im Übergangsbereich 14.

Wird die Kugelschale 6 in das Gelenkgehäuse 3 eingebaut und dabei der Kugelschalenkörper 11 mit seiner zweiten Kugelschalenkörperhälfte 16 in Richtung des Pfeils 25 gegen eine konkave Gegenfläche 26 im Innern des Gelenkgehäuses 3 gedrückt, führt die vorgenannte größere Ausbildung der zweiten Kugelschalenkörperhälfte 16 dazu, dass die zweite Kugelschalenkörperhälfte 16 aufgrund des Drucks verformt wird, sodass die zweite Innenumfangsflächenhälfte 18 auf der Kugelfläche 9 liegt und der Schlitz 19 geschlossen wird.

Der Kugelschalenkörper 11 weist ferner eine Außenumfangsfläche 27 auf, wobei die erste Kugelschalenkörperhälfte 15 eine erste Außenumfangsflächenhälfte 28 der Außenumfangsfläche 27 und die zweite Kugelschalenkörperhälfte 16 eine zweite Außenumfangsflächenhälfte 29 der Außenumfangsfläche 27 umfasst. Die zweite Außenumfangsflächenhälfte 29 ist dabei konvex ausgebildet. Bei dem vorgenannten Drücken des Kugelschalenkörpers 11 mit seiner zweiten Kugelschalenkörperhälfte 16 in Richtung des Pfeils 25 gegen die konkave Gegenfläche 26 wird der Kugelschalenkörper 11 insbesondere mit seiner zweiten Außenumfangsflächenhälfte 29 in Richtung des Pfeils 25 gegen die konkave Gegenfläche 26 gedrückt.

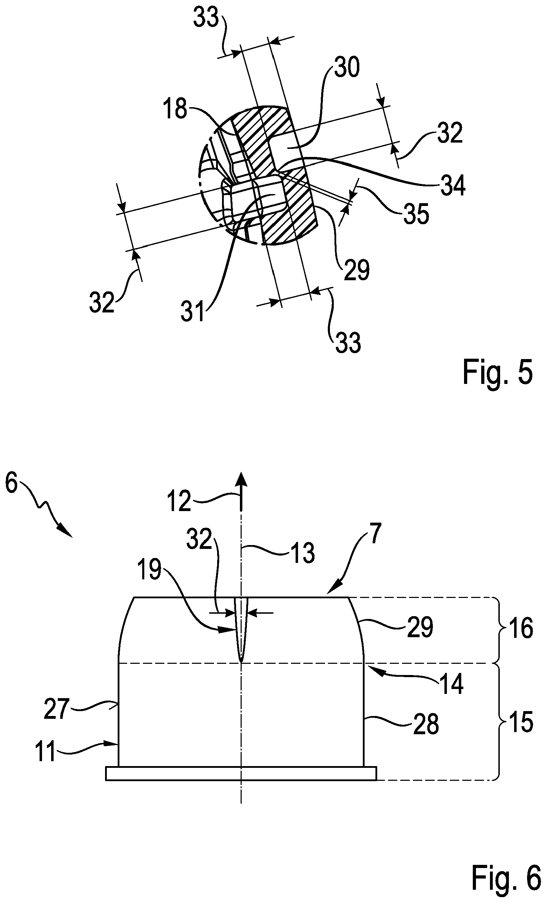

Fig. 5 zeigt eine Schnittansicht der Kugelschale 6 entlang der aus der Fig. 4 ersichtlichen Schnittlinie B-B, wobei deutlich wird, dass der Schlitz 19 aus zwei Schlitzhälften 30 und 31 besteht, wobei eine erste der Schlitzhälften 30 in die zweite Außenumfangsflächenhälfte 29 und eine zweite der Schlitzhälften 31 in die zweite Innenumfangsflächenhälfte 18 eingebracht ist. Die Schlitzhälften 30 und 31 weisen in Umfangsrichtung jeweils die gleiche Schlitzhälftenweite 32 auf. Ferner sind die Schlitzhälften 30 und 31 in Umfangsrichtung versetzt zueinander angeordnet, sodass der Schlitz 19 einen Stufenschlitz bildet. Dabei sind die Schlitzhälften 30 und 31 in Umfangsrichtung um die Schlitzhälftenweite 32 versetzt zueinander angeordnet, sodass der Schlitz 19 in Umfangsrichtung eine resultierende Schlitzweite aufweist, die der Schlitzhälftenweite 32 entspricht. Jede der Schlitzhälften 30 und 31 erstreckt sich bis oder fast bis zur Mitte der Wandung 24 in die Wandung 24 hinein, wobei die Schlitzhälften die gleiche Schlitzhälftentiefe 33 aufweisen. Ferner sind die Schlitzhälften 30 und 31 insbesondere durch eine dünne Haut 34 voneinander getrennt, deren Dicke 35 deutlich geringer als die Schlitzhälftentiefe 33 ist. Der Kugelschalenkörper 11 wird bevorzugt in einem Spritzgusswerkzeug als Spritzgussteil hergestellt, durch dessen Entformen die Haut 34 in der Regel reißt. Somit ist die Haut 34 nach dem Entformen des Kugelschalenkörpers 11 aus dem Spritzgusswerkzeug insbesondere nicht mehr vorhanden.

Wie aus Fig. 4 ersichtlich, ist die Innenumfangsflächenentfernung 21 um einen Längenunterschied 36 größer als der Radius 22 der Kugelfläche 9. Insbesondere wird der Längenunterschied 36 in Richtung der Längsachse 13 ausgehend von dem Übergangsbereich 14 bis zu der Kugelschalenöffnung 7 hin größer. Beispielsweise entspricht der Längenunterschied 36 an oder im Bereich der Kugelschalenöffnung 7 der halben Schlitzhälftenweite 32 geteilt durch die Kreiszahl Pi.

Bevorzugt bildet jeder auf der zweiten Innenumfangsflächenhälfte 18 liegende und in Richtung der Längsachse 13 verlaufende Bogen einen Kreisbogen, von denen einer in Verlängerung gestrichelt dargestellt und mit dem Bezugszeichen 37 bezeichnet ist. Die die Kreisbögen betreffende Beschreibung erfolgt nachfolgend lediglich anhand des dargestellten Kreisbogens 37. Insbesondere ist diese Beschreibung aber analog auf jeden Kreisbogen zu übertragen. Der Radius 38 des Kreisbogens 37 ist größer als der Radius 22 der Kugelfläche 9, wobei der Mittelpunkt 39 des Kreisbogens 37 quer zur Längsachse 13 gegenüber dem Kugelmittelpunkt 20 der Kugelfläche 9 versetzt ist. Vorzugsweise schneidet der Kreisbogen 37 im Übergangsbereich 14 oder in der Nähe des Übergangsbereichs 14 die Kugelfläche 9. Ferner weist der Kreisbogen 37 an oder im Bereich der Kugelschalenöffnung 7 zu dem Kugelmittelpunkt 20 der Kugelfläche 9 einen Abstand auf, der insbesondere der Summe aus dem Radius 22 der Kugelfläche 9 und dem Längenunterschied 36 an oder im Bereich der Kugelschalenöffnung 7 entspricht. Dieser Abstand entspricht insbesondere auch der Innenumfangsflächenentfernung 21 an oder im Bereich der Kugelschalenöffnung 7. Bevorzugt entspricht der vorgenannte Längenunterschied 36 an oder im Bereich der Kugelschalenöffnung 7 der halben resultierenden Schlitzweite geteilt durch die Kreiszahl Pi, wobei die resultierenden Schlitzweite hier insbesondere der Schlitzhälftenweite 32 entspricht. Vorteilhaft entspricht der vorgenannte Längenunterschied 36 an oder im Bereich der Kugelschalenöffnung 7 somit der halben Schlitzhälftenweite 32 geteilt durch die Kreiszahl Pi.

Gemäß einer ersten Abwandlung verjüngen sich die Schlitzweiten 32 der Schlitzhälften 30 und 31 jeweils in Richtung der Längsachse 13 ausgehend von der Kugelschalenöffnung 7 bis zum Übergangsbereich 14. Somit verjüngt sich insbesondere auch die resultierende Schlitzweite des Schlitzes 19 in Richtung der Längsachse 13 ausgehend von der Kugelschalenöffnung 7 bis zum Übergangsbereich 14.

Gemäß einer zweiten Abwandlung ist der Schlitz 19 nicht stufenförmig ausgebildet. Dies kann unter Bezugnahme auf Fig. 5 z.B. dadurch erzielt werden, dass die beiden Schlitzhälften 30 und 31 nicht zueinander versetzt sind, sondern, insbesondere radial, einander gegenüberliegen.

Fig. 6 zeigt eine Seitenansicht einer Kugelschale 6 gemäß einer zweiten Ausführungsform, wobei zu der ersten Ausführungsform identische oder ähnliche Merkmale mit denselben Bezugszeichen wie bei der ersten Ausführungsform bezeichnet sind. Im Unterschied zu der ersten Ausführungsform verjüngt sich die Schlitzweite 32 des Schlitzes 19 in Richtung der Längsachse 13 ausgehend von der Kugelschalenöffnung 7 bis zu dem Übergangsbereich 14. Ferner ist der Schlitz 19 nicht als Stufenschlitz ausgebildet, sondern durchdringt die Wandung des Lagerschalenkörpers 11 in radialer Richtung und/oder quer zur Längsachse 13. Die Schlitztiefe des Schlitzes 19 entspricht somit insbesondere der Dicke der Wandung. Ist vor dem Entformen der Kugelschale aus dem Spritzgusswerkzeug die Haut vorhanden, entspricht die Schlitztiefe des Schlitzes 19 vor dem Entformen vorzugsweise fast der Dicke der Wandung, da die Haut bevorzugt an einem radialen Ende des Schlitzes vorgesehen ist, beispielsweise an der zweiten Außenumfangsflächenhälfte 29 oder an der zweiten Innenumfangsflächenhälfte. Alternativ ist die Haut vor dem Entformen z.B. mittig in der Wandung vorgesehen, sodass vor dem Entformen der Schlitz 19 zwei, insbesondere radial, einander gegenüberliegende Schlitzhälften aufweist. Abgesehen von diesen Unterschieden stimmt die Kugelschale gemäß der zweiten Ausführungsform mit der Kugelschale gemäß der ersten Ausführungsform überein, sodass zur weiteren Beschreibung der Kugelschale gemäß der zweiten Ausführungsform auf die Beschreibung der Kugelschale gemäß der ersten Ausführungsform verwiesen wird. Insbesondere kann die Kugelschale gemäß der zweiten Ausführungsform in dem Kugelgelenk 1 die Kugelschale gemäß der ersten Ausführungsform ersetzen.

Die Kugelschale gemäß der zweiten Ausführungsform entspricht beispielsweise der Kugelschale gemäß der ersten Ausführungsform und Berücksichtigung der ersten und der zweiten Abwandlung.

### Bezugszeichen

- 1: Kugelgelenk
- 2: Gehäuseöffnung
- 3: Gelenkgehäuse
- 4: Gelenkkugel
- 5: Kugelzapfen
- 6: Kugelschale
- 7: Kugelschalenöffnung
- 8: Innenumfangsfläche
- 9: Kugelfläche
- 10: Hohlraum
- 11: Kugelschalenkörper
- 12: axiale Richtung
- 13: Längsachse
- 14: Übergangsbereich
- 15: erste Kugelschalenkörperhälfte
- 16: zweite Kugelschalenkörperhälfte
- 17: erste Innenumfangsflächenhälfte
- 18: zweite Innenumfangsflächenhälfte
- 19: Schlitz
- 20: Kugelmittelunkt der Kugelfläche
- 21: Innenumfangsflächenentfernung
- 22: Radius der Kugelfläche
- 23: Dicke der Wandung
- 24: Wandung des Kugelschalenkörpers
- 25: Drückrichtung
- 26: Gegenfläche
- 27: Außenumfangsfläche
- 28: erste Außenumfangsflächenhälfte
- 29: zweite Außenumfangsflächenhälfte
- 30: erste Schlitzhälfte
- 31: zweite Schlitzhälfte
- 32: Schlitzhälftenweite, Schlitzweite
- 33: Schlitzhälftentiefe
- 34: Haut
- 35: Dicke der Haut
- 36: Längenunterschied
- 37: Kreisbogen
- 38: Radius des Kreisbogens
- 39: Mittelpunkt des Kreisbogens

## Patentansprüche

1. Kugelschale für ein Kugelgelenk, mit einem eine Kugelschalenöffnung (7) und einen Hohlraum (10) umfassenden Kugelschalenkörper (11), der eine den Hohlraum (10) begrenzende und um eine sich in einer axialen Richtung (12) erstreckende Längsachse (13) herum verlaufende, konkave Innenumfangsfläche (8) umfasst und entlang der Längsachse (13) in zwei hintereinander angeordnete und in einem Übergangsbereich (14) ineinander übergehende Kugelschalenkörperhälften (15, 16) unterteilt ist, die jeweils eine um die Längsachse (13) herum verlaufende Innenumfangsflächenhälfte (17, 18) der Innenumfangsfläche (8) umfassen, wobei eine erste der Kugelschalenkörperhälften (15) eine erste der Innenumfangsflächenhälften (17) umfasst, die auf einer Kugelfläche (9) liegt und in Umfangsrichtung geschlossen ausgebildet ist, und eine zweite der Kugelschalenkörperhälften (16) die Kugelschalenöffnung (7), wenigstens einen in Richtung der Längsachse (13) verlaufenden Schlitz (19) und eine zweite der Innenumfangsflächenhälften (18) umfasst, die in Umfangsrichtung geschlossen oder bis auf den Schlitz (19) geschlossen ausgebildet ist, **dadurch gekennzeichnet, dass** die zweite Kugelschalenkörperhälfte (16) derart ausgebildet ist, dass die zweite Innenumfangsflächenhälfte (18) zumindest im axialen Abstand zum Übergangsbereich (14) außerhalb der Kugelfläche (9) liegt, wobei die zweite Kugelschalenkörperhälfte (16) zum Schließen des Schlitzes (19) verformbar ist, wonach die zweite Innenumfangsflächenhälfte (18) auf der Kugelfläche (9) liegt.

2. Kugelschale nach Anspruch 1, **dadurch gekennzeichnet, dass** die zweite Innenumfangsflächenhälfte (18) zumindest im axialen Abstand zum Übergangsbereich (14) zu dem Kugelmittelpunkt (20) der Kugelfläche (9) eine Innenumfangsflächenentfernung (21) aufweist, die größer als der Radius (22) der Kugelfläche (9) ist.

3. Kugelschale nach Anspruch 2, **dadurch gekennzeichnet, dass** der Schlitz (19) in Umfangsrichtung eine Schlitzweite (32) aufweist und die Innenumfangsflächenentfernung (21) der zweiten Innenumfangsflächenhälfte (18) um einen von der Schlitzweite (32) abhängigen Längenunterschied (36) größer als der Radius (22) der Kugelfläche (9) ist, wobei der von der Schlitzweite (32) abhängige Längenunterschied (36) dem Quotienten aus der halben Schlitzweite (32) und der Kreiszahl Pi entspricht.

4. Kugelschale nach einem der vorangehenden Ansprüche, **dadurch gekennzeichnet, dass** der Kugelschalenkörper (11) eine um die Längsachse (13) herum verlaufende Außenumfangsfläche (27) umfasst, die erste Kugelschalenkörperhälfte (15) eine um die Längsachse (13) herum verlaufende erste Außenumfangsflächenhälfte (28) der Außenumfangsfläche (27) umfasst und die zweite Kugelschalenkörperhälfte (16) eine um die Längsachse (13) herum verlaufende zweite Außenumfangsflächenhälfte (29) der Außenumfangsfläche (27) umfasst, wobei die zweite Außenumfangsflächenhälfte (29) konvex ist und zumindest im axialen Abstand zum Übergangsbereich zu dem Kugelmittelpunkt (20) der Kugelfläche (9) eine Außenumfangsflächenentfernung aufweist, die größer als die Entfernung der ersten Außenumfangsflächenhälfte (28) im Übergangsbereich (14) zu dem Kugelmittelpunkt (20) der Kugelfläche (9) ist.

5. Kugelschale nach einem der vorangehenden Ansprüche, **dadurch gekennzeichnet, dass** der Kugelschalenkörper (11) eine den Hohlraum (10) umschließende oder zumindest teilweise umschließende und die Innenumfangsfläche (8) umfassende Wandung (24) aufweist, in welcher der Schlitz (19) und die Kugelschalenöffnung (7) vorgesehen sind, wobei in der zweiten Kugelschalenkörperhälfte (16) die Dicke (23) der Wandung (24) konstant oder näherungsweise konstant ist.

6. Kugelschale nach Anspruch 5, **dadurch gekennzeichnet, dass** im Übergangsbereich (14) die Dicke (23) der Wandung (24) in der zweiten Kugelschalenkörperhälfte (16) der Dicke (23) der Wandung (24) in der ersten Kugelschalenkörperhälfte (15) entspricht.

7. Kugelschale nach einem der vorangehenden Ansprüche, **dadurch gekennzeichnet, dass** der Schlitz (19) in Umfangsrichtung die oder eine Schlitzweite (32) aufweist, die sich ausgehend von der Kugelschalenöffnung (7) bis zum Übergangsbereich (14) hin verjüngt.

8. Kugelschale nach einem der vorangehenden Ansprüche, **dadurch gekennzeichnet, dass** jeder auf der zweiten Innenumfangsflächenhälfte (18) liegende und in Richtung der Längsachse (13) verlaufende Bogen einen Kreisbogen (37) bildet, dessen Radius (38) größer als der Radius (22) der Kugelfläche (9) ist, wobei der Mittelpunkt (39) jedes Kreisbogens (37) quer zur Längsachse (13) gegenüber dem Kugelmittelpunkt (20) der Kugelfläche (9) versetzt ist.

9. Kugelschale nach Anspruch 8, **dadurch gekennzeichnet, dass** jeder Kreisbogen (37) im Übergangsbereich (14) oder in der Nähe des Übergangsbereichs (14) die Kugelfläche (9) schneidet und an oder im Bereich der Kugelschalenöffnung (7) zu dem Kugelmittelpunkt (20) der Kugelfläche (9) einen Abstand aufweist, der einer Summe aus dem Radius (20) der Kugelfläche (9) und einem Längenunterschied (36) entspricht, welcher der halben Schlitzweite (32) geteilt durch die Kreiszahl Pi entspricht.

10. Kugelschale nach einem der vorangehenden Ansprüche, **dadurch gekennzeichnet, dass** der Kugelschalenkörper (11) ein in einem Spritzgusswerkzeug hergestelltes Spritzgussteil ist, wobei im Spritzgusswerkzeug der Schlitz (19) durch eine Haut (34) geschlossen ist, wobei die Haut (34) dünner als eine Schlitztiefe und/oder eine Dicke einer Wandung (23) im Bereich des Schlitzes (19) ist und beim Entformen des Kugelschalenkörpers (11) aus dem Spritzgusswerkzeug die Haut (34) einreißt.

11. Kugelschale nach einem der vorangehenden Ansprüche, **dadurch gekennzeichnet, dass** der Schlitz (19) in einer bezüglich des Kugelmittelpunkts (20) der Kugelfläche (9) radialen Richtung und/oder in einer quer zur Längsachse (13) verlaufenden Richtung stufenförmig ausgebildet ist, wobei der stufenförmige Schlitz (19) zwei in Richtung der Längsachse verlaufende Schlitzhälften (30, 31) aufweist, die in Umfangsrichtung zueinander versetzt angeordnet sind.

## Claims

1. Ball socket for a ball joint, having a ball socket body (11) which comprises a ball socket opening (7) and a cavity (10) and which comprises a concave internal circumferential face (8) that delimits the cavity (10) and runs about a longitudinal axis (13) extending in an axial direction (12) and which along the longitudinal axis (13) is subdivided into two ball socket body halves (15, 16) that are disposed in succession and in a transition region (14) transition into one another, said ball socket body halves (15, 16) comprising in each case one internal circumferential half face (17, 18) of the internal circumferential face (8) that runs about the longitudinal axis (13) wherein a first one of the ball socket body halves (15) comprises a first one of the internal circumferential face halves (17) that lies on a ball face (9) and in the circumferential direction is configured so as to be closed; and a second one of the ball socket body halves (16) comprises the ball socket opening (7), at least one slot (19) that runs in the direction of the longitudinal axis (13), and a second one of the internal circumferential face halves (18) which in the circumferential direction is configured so as to be closed, or closed with the exception of the slot (19), **characterized in that** the second ball socket body half (16) is configured in such a manner that the second internal circumferential face (18), at least in the axial spacing in relation to the transition region (14), lies outside the ball face (9), wherein the second ball socket body half (16) for closing the slot (19) is deformable, on account of which the second internal circumferential face half (18) lies on the ball face (9).

2. Ball socket according to Claim 1, **characterized in that** the second internal circumferential face half (18), at least in the axial spacing in relation to the transition region (14), from the ball centre (20) of the ball face (9) has an internal circumferential face distance (21) which is larger than the radius (22) of the ball face (9).

3. Ball socket according to Claim 2, **characterized in that** the slot (19) in the circumferential direction has a slot width (32), and the internal circumferential face distance (21) of the second internal circumferential face half (18) is larger than the radius (22) of the ball face (9) by a length differential (36) that is a function of the slot width (32), wherein the length differential (36) that is a function of the slot width (32) corresponds from the quotient of half the slot width (32) and the mathematical constant pi.

4. Ball socket according to one of the preceding claims, **characterized in that** the ball socket body (11) comprises an external circumferential face (27) that runs about the longitudinal axis (13), the first ball socket body half (15) comprises a first external circumferential face half (28) of the external circumferential face (27) that runs about the longitudinal axis (13), and the second ball socket body half (16) comprises a second external circumferential face half (29) of the external circumferential face (27) that runs about the longitudinal axis (13), wherein the second external circumferential face half (29) is convex and, at least in the axial spacing in relation to the transition region, from the ball centre (20) of the ball face (9) has an external circumferential face distance which is larger than the distance of the first external circumferential face half (28) from the ball centre (20) of the ball face (9) in the transition region (14).

5. Ball socket according to one of the preceding claims, **characterized in that** the ball socket body (11) has a wall (24) which encloses, or at least partially encloses, the cavity (10) and comprises the internal circumferential face (8) and in which the slot (19) and the ball socket opening (7) are provided, wherein the thickness (23) of the wall (24) in the second ball socket body half (16) is consistent or approximately consistent.

6. Ball socket according to Claim 5, **characterized in that** in the transition region (14) the thickness (23) of the wall (24) in the second ball socket body half (16) corresponds to the thickness (23) of the wall (24) in the first ball socket body half (15).

7. Ball socket according to one of the preceding claims, **characterized in that** the slot (19) in the circumferential direction has the or a slot width (32) which, proceeding from the ball socket opening (7), tapers towards the transition region (14).

8. Ball socket according to one of the preceding claims, **characterized in that** each curve that lies on the second internal circumferential face half (18) and runs in the direction of the longitudinal axis (13) forms an arc (37) of which the radius (38) is larger than the radius (22) of the ball face (9), wherein the centre (39) of each arc (37) in relation to the ball centre (20) of the ball face (9) is offset transversely to the longitudinal axis (13).

9. Ball socket according to Claim 8, **characterized in that** each arc (37) in the transition region (14) or in the proximity of the transition region (14) intersects the ball face (9), and at or in the region of the ball socket opening (7) from the ball centre (20) of the ball face (9) has a spacing which corresponds to a sum of the radius (20) of the ball face (9) plus a length differential (36) that corresponds to half the slot width (32) divided by the mathematical constant pi.

10. Ball socket according to one of the preceding claims, **characterized in that** the ball socket body (11) is an injection-moulded part which is produced by an injection-moulding tool, wherein the slot (19) in the injection-moulding tool is closed by a skin (34), wherein the skin (34) is thinner than a slot depth and/or a thickness of a wall (23) in the region of the slot (19) and the skin (34) tears when the ball socket body (11) is demoulded from the injection-moulding tool.

11. Ball socket according to one of the preceding claims, **characterized in that** the slot (19) in a direction that is radial in terms of the ball centre (20) of the ball face (9) and/or in a direction that runs transversely to the longitudinal axis (13) is configured so as to be step-shaped, wherein the step-shaped slot (19) has two slot halves (30, 31) which run in the direction of the longitudinal axis and are disposed so as to be mutually offset in the circumferential direction.

## Revendications

1. Coque sphérique pour une articulation sphérique, comprenant un corps de coque sphérique (11) doté d'une ouverture de coque sphérique (7) et d'une cavité (10), lequel corps de coque sphérique comprend une surface périphérique intérieure concave (8) limitant la cavité (10) et s'étendant autour d'un axe longitudinal (13) s'étendant dans une direction axiale (12) et est divisé le long de l'axe longitudinal (13) en deux moitiés de corps de coque sphérique (15, 16) disposées l'une derrière l'autre et se prolongeant l'une dans l'autre dans une région de transition (14), lesquelles comprennent chacune une moitié de surface périphérique intérieure (17, 18) de la surface périphérique intérieure (8), s'étendant autour de l'axe longitudinal (13), une première des moitiés de corps de coque sphérique (15) comprenant une première des moitiés de surface périphérique intérieure (17) qui est située sur une surface sphérique (9) et qui est réalisée sous forme fermée dans la direction périphérique, et une deuxième des moitiés de corps de coque sphérique (16) comprenant l'ouverture de coque sphérique (7), au moins une fente (19) s'étendant dans la direction de l'axe longitudinal (13) et une deuxième des moitiés de surface périphérique intérieure (18) qui est réalisée sous forme fermée dans la direction périphérique ou sous forme fermée à l'exception de la fente (19),
**caractérisée en ce que** la deuxième moitié de corps de coque sphérique (16) est réalisée de telle sorte que la deuxième moitié de surface périphérique intérieure (18) soit située au moins à une distance axiale de la région de transition (14) à l'extérieur de la surface sphérique (9), la deuxième moitié de corps de coque sphérique (16) pouvant être déformée pour fermer la fente (19), de telle sorte que la deuxième moitié de surface périphérique intérieure (18) repose sur la surface sphérique (9).

2. Coque sphérique selon la revendication 1, **caractérisée en ce que** la deuxième moitié de surface périphérique intérieure (18) présente, au moins à une distance axiale de la région de transition (14), un espacement de la surface périphérique intérieure (21) au centre de la sphère (20) de la surface sphérique (9) qui est supérieur au rayon (22) de la surface sphérique (9) .

3. Coque sphérique selon la revendication 2, **caractérisée en ce que** la fente (19) présente, dans la direction périphérique, une largeur de fente (32), et l'espacement de la surface périphérique intérieure (21) de la deuxième moitié de surface périphérique intérieure (18) est supérieur au rayon (22) de la surface sphérique (9) d'une différence de longueur (36) dépendant de la largeur de fente (32), la différence de longueur (36) dépendant de la largeur de fente (32) correspondant au quotient de la moitié de la largeur de fente (32) et du nombre Pi.

4. Coque sphérique selon l'une quelconque des revendications précédentes, **caractérisée en ce que** le corps de coque sphérique (11) comprend une surface périphérique extérieure (27) s'étendant autour de l'axe longitudinal (13), la première moitié de corps de coque sphérique (15) comprend une première moitié de surface périphérique extérieure (28) de la surface périphérique extérieure (27), s'étendant autour de l'axe longitudinal (13), et la deuxième moitié de corps de coque sphérique (16) comprend une deuxième moitié de surface périphérique extérieure (29) de la surface périphérique extérieure (27) s'étendant autour de l'axe longitudinal (13), la deuxième moitié de surface périphérique extérieure (29) étant convexe et présentant, au moins à une distance axiale de la région de transition, un espacement de la surface périphérique extérieure au centre de la sphère (20) de la surface sphérique (9) qui est supérieur à l'espacement de la première moitié de surface périphérique extérieure (28) dans la région de transition (14) au centre de la sphère (20) de la surface sphérique (9).

5. Coque sphérique selon l'une quelconque des revendications précédentes, **caractérisée en ce que** le corps de coque sphérique (11) présente une paroi (24) entourant la cavité (10) ou l'entourant au moins en partie et comprenant la surface périphérique intérieure (8), dans laquelle paroi sont prévues la fente (19) et l'ouverture de coque sphérique (7), l'épaisseur (23) de la paroi (24) étant constante ou approximativement constante dans la deuxième moitié de corps de coque sphérique (16).

6. Coque sphérique selon la revendication 5, **caractérisée en ce que** dans la région de transition (14), l'épaisseur (23) de la paroi (24) dans la deuxième moitié de corps de coque sphérique (16) correspond à l'épaisseur (23) de la paroi (24) dans la première moitié de corps de coque sphérique (15).

7. Coque sphérique selon l'une quelconque des revendications précédentes, **caractérisée en ce que** la fente (19) dans la direction périphérique présente la ou une largeur de fente (32) qui se rétrécit à partir de l'ouverture de coque sphérique (7) jusqu'à la région de transition (14).

8. Coque sphérique selon l'une quelconque des revendications précédentes, **caractérisée en ce que** chaque arc situé sur la deuxième moitié de surface périphérique intérieure (18) et s'étendant dans la direction de l'axe longitudinal (13) forme un arc de cercle (37) dont le rayon (38) est supérieur au rayon (22) de la surface sphérique (9), le centre (39) de chaque arc de cercle (37) étant décalé par rapport au centre de la sphère (20) de la surface sphérique (9) transversalement à l'axe longitudinal (13).

9. Coque sphérique selon la revendication 8, **caractérisée en ce que** chaque arc de cercle (37) dans la région de transition (14) ou à proximité de la région de transition (14) intersecte la surface sphérique (9) et au niveau de ou dans la région de l'ouverture de coque sphérique (7) présente une distance au centre de la sphère (20) de la surface sphérique (9) qui correspond à une somme du rayon (20) de la surface sphérique (9) et d'une différence de longueur (36) qui correspond à la moitié de la largeur de fente (32) divisée par le nombre Pi.

10. Coque sphérique selon l'une quelconque des revendications précédentes, **caractérisée en ce que** le corps de coque sphérique (11) est une pièce moulée par injection fabriquée dans un outil de moulage par injection, la fente (19) étant fermée par une peau (34) dans l'outil de moulage par injection, la peau (34) étant plus mince qu'une profondeur de fente et/ou qu'une épaisseur d'une paroi (23) dans la région de la fente (19) et la peau (34) se déchirant lors du démoulage du corps de coque sphérique (11) hors de l'outil de moulage par injection.

11. Coque sphérique selon l'une quelconque des revendications précédentes, **caractérisée en ce que** la fente (19) est réalisée sous forme étagée dans une direction radiale par rapport au centre de la sphère (20) de la surface sphérique (9) et/ou dans une direction s'étendant transversalement à l'axe longitudinal (13), la fente de forme étagée (19) présentant deux moitiés de fente (30, 31) s'étendant dans la direction de l'axe longitudinal, qui sont disposées de manière décalée l'une par rapport à l'autre dans la direction périphérique.
